# EUROPEAN PATENT APPLICATION

(11) **EP 1 753 253 A1**
(43) Date of publication of application: **14.02.2007**
(21) Application number: 04734377.7
(22) Date of filing: 21.05.2004
(51) Int. Cl.: H04Q 7/30, H04Q 7/36, H04Q 7/38, H04L 12/28

(54) **THIRD-GENERATION MOBILE COMMUNICATION/RADIO LAN INTEGRATION SYSTEM, AND THIRD-GENERATION MOBILE COMMUNICATION/RADIO LAN INTEGRATION METHOD**

(71) Applicant: MITSUBISHI DENKI KABUSHIKI KAISHA, Chiyoda-ku, Tokyo 100-8310 (JP)
(72) Inventor: KINOSHITA, Yusuke, c/o Mitsubishi Denki K.K., Tokyo 100-8310 (JP); SHIMIZU, Keiichi, c/o Mitsubishi Denki K.K., Tokyo 100-8310 (JP)
(74) Representative: Pfenning, Meinig & Partner GbR
(86) International application number: PCT/JP2004/007282
(87) International publication number: WO 2005/115034

(57) **Abstract**

In a third-generation mobile-communication/wireless-LAN integration system in which a third-generation mobile communication system is integrated with a wireless LAN system, wherein an access network unit of the third-generation mobile communication system performs control, assuming that the wireless LAN system is a packet communication channel. Therefore, integration of the third-generation mobile communication system with the wireless LAN system can be achieved. Furthermore, the access network unit has a radio network controller (8) connected to a base transceiver station (9) capable of performing wireless communication with a mobile terminal (1) in the wireless LAN system, and electrically connected to access point stations (10, 11) of the wireless LAN system. Therefore, setup and control of a wireless LAN channel lead by the third-generation mobile communication system can be performed between both systems.

## Description

### TECHNICAL FIELD

The present invention relates to a third-generation mobile-communication/wireless-LAN integration system and a third-generation mobile-communication/wireless-LAN integration method, which integrate a third-generation mobile communication system with a wireless LAN.

### BACKGROUND ART

Conventionally, various studies have been made for integration of the 3rd generations cellular telecommunication system (hereinafter, "3G cellular system") and a wireless LAN (hereinafter, WLAN), since high-speed data communications in the WLAN and wide coverage of the 3G cellular system supplement each other. Conventionally, one example of a concept and a realizing method has been proposed in the IEEE (the Institute of Electrical and Electronics Engineers).

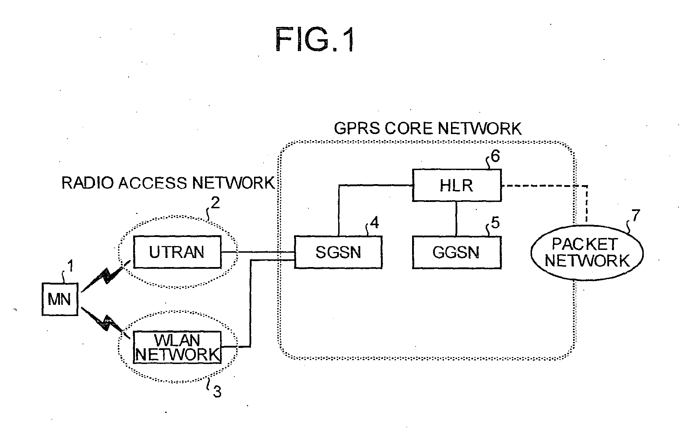

Fig. 1 is a block diagram of relevant parts of a tight model proposed in the IEEE, as one example of a 3G cellular system/WLAN integration method. In the tight model, the WLAN system is regarded as a radio access network (hereinafter, RAN) of the 3G cellular system, and the WLAN system is integrated with the 3G cellular system by an RAN-core network interface of the 3G cellular system.

In Fig. 1, a mobile terminal 1 in the WLAN can perform wireless communications with a UMTS (Universal Mobile Telecommunication System network, which is the European standard for 3G network) terrestrial radio access network (hereinafter, UTRAN) 2 and a WLAN system 3. The UTRAN 2 and the WLAN system 3 are connected to a serving GPRS support node (hereinafter, SGSN) 4 in a general packet radio service (GPRS) core network of the 3G cellular system. The SGSN 4 is further connected to a home location register (hereinafter, HLR) 6. Further, the HLR 6 is connected to a gateway GPRS support node (hereinafter, GGSN) 5 and a packet network 7.

The tight model proposed by the IEEE is a model in which an operator of the 3G cellular system also serves as an operator of the WLAN system, and the 3G cellular system and the WLAN system are both controlled by the GPRS core network standard, which is the 3G cellular system standard. Therefore, a mechanism for authentication and position registration in the 3G cellular system can be used as it is (see Nonpatent Literature 1).

### Nonpatent Literature 1

IEEE Wireless Communications, vol. 9, no. 5, October 2002, pp. 112-124 WLAN-GPRS Integration for Next-Generation Mobile Networks Apostolis K. Salkintzis, Chad Fors and Rajesh Pazhyannur

In the tight model having the configuration described above, the WLAN system is regarded as the RAN of the 3G cellular system. However, there are following problems.

That is, in the current WLAN standard (for example, IEEE 802.11b), the mobile terminal 1 determines own movement at all times. Accordingly, position registration is also always performed based on the mobile terminal 1. As a result, there is an unsolved problem that switching from the WLAN system to the 3G cellular system cannot be controlled by determination of the 3G cellular system.

Furthermore, at the time of confirming switching from the 3G cellular system to the WLAN system on the 3G cellular system side, the size of servicing area of the WLAN system and that of the 3G cellular system are not always the same. Therefore, there are unsolved problems that it cannot be confirmed whether the WLAN system can be used at the current position of the mobile terminal 1, even if it is in the servicing area of the 3G cellular system, and at the current position of the mobile terminal 1, measurement with respect to the WLAN system (detection of a cell and an access point station) is performed, even if there is no cell of the WLAN system.

In the measurement with respect to the WLAN system, there are unsolved problems that the mobile terminal 1 performs measurement with respect to all detectable WLAN access point stations, and, even when a measurement result not required is included in the measurement results, all measurement results are transmitted to the network by a measurement information notification.

Furthermore, it is necessary to perform MAC frame transfer in conformity with IEEE 802.11 to perform communications via the WLAN system. For this purpose, a mechanism that can mutually exchange an MAC address of the WLAN interface of the mobile terminal 1 and an MAC address of the RNC interface, which is an MAC frame termination point on the network side, is required.

In the normal IP packet communication, the problem of IP address and MAC address is solved by ARP processing. However, in the tight model, since an IP address is not added to each entity, there is an unsolved problem that an ARP function does not function accurately.

Furthermore, there is an unsolved problem that, in the WLAN system, since there is no paging function in the 3G cellular system, power is consumed excessively.

The present invention has been achieved to solve these problems, and an object of the present invention is to provide a third-generation mobile-communication/wireless-LAN integration system and a third-generation mobile-communication/wireless-LAN integration method that can solve the problems mentioned above, not by connecting the WLAN system to the 3G cellular system as one network, but by making the WLAN system usable as one high-speed channel in the 3G cellular system.

### DISCLOSURE OF INVENTION

A third-generation mobile-communication/wireless-LAN integration system according to one aspect of the present invention is a system in which a third-generation mobile communication system and a wireless LAN system are integrated. The third-generation mobile communication system includes an access network unit that controls the wireless LAN system by regarding the wireless LAN system as a packet communication channel. According to the present invention, the integration with the wireless LAN system as a packet communication channel in the third-generation mobile communication system can be easily performed at a low cost.

Furthermore, the access network unit includes a radio network controller connected to a base transceiver station capable of performing a wireless communication with a mobile terminal in the wireless LAN system, and electrically connected to an access point station of the wireless LAN system. Therefore, network control in the third-generation mobile communication system can be operated directly on the channel with a small improvement, and channel switching control lead by the third-generation mobile communication system can be easily achieved.

Moreover, the radio network controller forms a signaling channel of the third-generation mobile communication system with the mobile terminal via the base transceiver station, and forms a data channel with the mobile terminal via the access point station. The channel setting control of the wireless LAN between the third-generation mobile communication system and the wireless LAN lead by the third-generation mobile communication system can be performed.

A third-generation mobile-communication/wireless-local-area-network integration method according to another aspect of the present invention is for integrating a third-generation mobile communication system and a wireless local-area-network system. The third-generation mobile-communication/wireless-local-area-network integration method includes connecting the wireless local-area-network system to an access network unit of the third-generation mobile communication system; and controlling the wireless local-area-network system by regarding the wireless local-area-network system as a packet communication channel. According to the present invention, channel switching control lead by the third-generation mobile communication system can be easily achieved.

### BRIEF DESCRIPTION OF THE DRAWINGS

Fig. 1 is a block diagram of relevant parts of a conventional 3G cellular system/WLAN integration method;
Fig. 2 is a block diagram of relevant parts of a third-generation mobile-communication/wireless-LAN integration system according to the present invention;
Fig. 3 is an explanatory diagram of how a channel is formed in a UTRAN shown in Fig. 2;
Fig. 4 depicts a positional relationship of a cell of the 3G cellular system and a cell of WLAN;
Fig. 5 is a sequence diagram for explaining how measurement information notifications are transmitted from a mobile terminal to a radio network controller;
Fig. 6 depicts a positional relationship of cells of the 3G cellular system and a cell of WLAN;
Fig. 7 is a sequence diagram for explaining how a system information notification is transmitted from a base transceiver station to a mobile terminal and how a measurement information notification is transmitted from the mobile terminal to the radio network controller;
Fig. 8 depicts a positional relationship of a cell of the 3G cellular system and cells of WLAN;
Fig. 9 is a sequence diagram for explaining how system information notifications are transmitted from a base transceiver station to a mobile terminal and how a measurement information notification is transmitted from the mobile terminal to the radio network controller;
Fig. 10 depicts a positional relationship of a cell of the 3G cellular system and cells of WLAN;
Fig. 11 is a sequence diagram for explaining how the radio network controller on the network side selects a WLAN access point station to be connected and sets a WLAN system channel;
Fig. 12 is a chart indicating a WLAN measurement result set in the measurement information notification transmitted to the radio network controller, when a mobile terminal is present at a predetermined position;
Fig. 13 is a sequence diagram for explaining a case that the radio network controller on the network side determines whether to use the WLAN system channel, and a mobile terminal selects the WLAN access point station to be actually connected;
Fig. 14 is a sequence diagram for explaining how MAC addresses are exchanged between a mobile terminal and the radio network controller by a signaling procedure of the 3G cellular system;
Fig. 15 is a sequence diagram for explaining how MAC addresses are exchanged between a mobile terminal and the radio network controller on the WLAN system channel;
Fig. 16 is.a sequence diagram for explaining how the WLAN system channel is established by an RB Setup procedure, which is signaling of the 3G cellular system;
Fig. 17 depicts a positional relationship of a cell of the 3G cellular system and cells of WLAN;
Fig. 18 is a sequence diagram for explaining hard handover control of the WLAN system channel lead by the network;
Fig. 19 is a sequence diagram for explaining hard handover control of the WLAN system channel lead by the mobile terminal;
Fig. 20 is a sequence diagram when switching from the 3G cellular system to the WLAN system is performed based on a Channel Switching procedure of the 3G cellular system;
Fig. 21 is a sequence diagram when switching from the WLAN system to the 3G cellular system is performed based on the Channel Switching procedure of the 3G cellular system;
Fig. 22 is a sequence diagram when the power consumption of the WLAN system is reduced by paging of the 3G cellular system;
Fig. 23 depicts a connection mode between the radio network controller, the base transceiver station, and the WLAN access point stations; and
Fig. 24 depicts a connection mode between the radio network controller, the base transceiver station, the WLAN access point stations, and an IWB.

### BEST MODE(S) FOR CARRYING OUT THE INVENTION

Exemplary embodiments of a third-generation mobile-communication/wireless-LAN integration system according to the present invention will be explained below in detail with reference to the accompanying drawings. Note that the present invention is not limited to the embodiments.

### First Embodiment

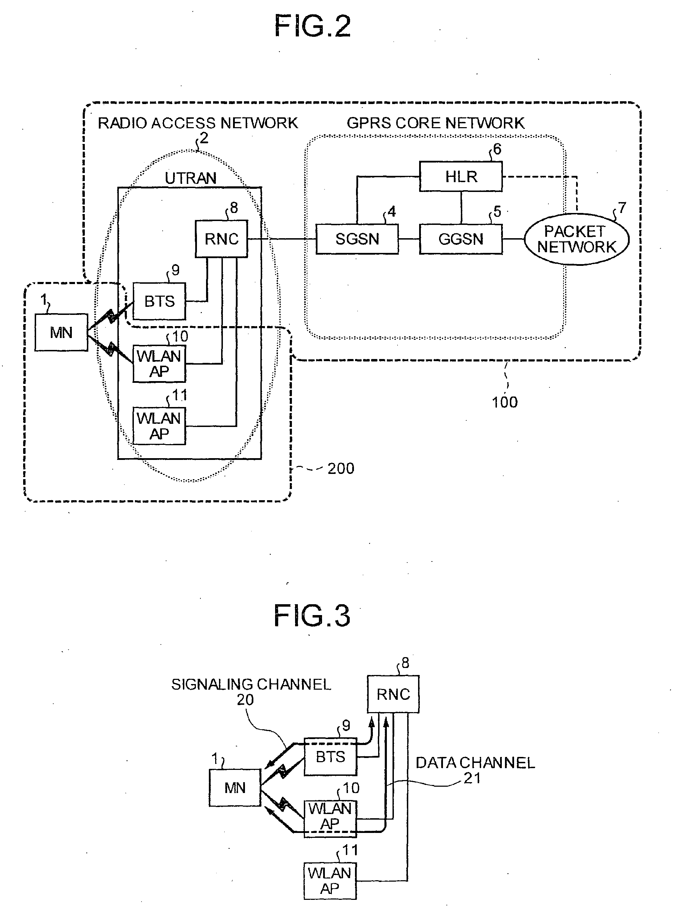

Fig. 2 is a block diagram of relevant parts of a third-generation mobile-communication/wireless-LAN integration system according to the present invention. In the third-generation mobile-communication/wireless-LAN integration system (hereinafter, "3G cellular/WLAN") according to the present invention, the 3G cellular system controls the WLAN system as one high-speed channel. In Fig. 1, a 3G cellular system unit 100 constituting a part of the 3G cellular system has a GPRS core network including the SGSN 4, the GGSN 5, the HLR 6, and the packet network 7, and the UTRAN 2 as an access network unit connected to the SGSN 4 of the core network.

The UTRAN 2 has a radio network controller 8, a base transceiver station 9 connected to the radio network controller 8, and a plurality of WLAN access point stations 10 and 11, as in the conventional configuration.

The mobile terminal 1 in the WLAN system can perform wireless communications with the base transceiver station 9 and the WLAN access point stations 10 and 11. The UTRAN 2 is connected to the SGSN 4 in the GPRS core network of the 3G cellular system. The SGSN 4 is connected to the GGSN 5 and the HLR 6.

According to the present embodiment, the radio network controller 8 is connected to the base transceiver station 9 to control the base transceiver station 9, and is also connected to the WLAN access point stations 10 and 11 to control the WLAN access point stations 10 and 11, as in the conventional configuration. Thus, the WLAN access point stations 10 and 11 of the WLAN system are included in the UTRAN 2, and the radio network controller 8 controls the WLAN access point station 10 as one high-speed packet channel of the 3G cellular system.

Fig. 3 is an explanatory diagram of how data flows (how the channel is formed) in the TRRAN 2 shown in Fig. 2. Specifically, Fig. 3 is one example of a set route of the signaling channel and the data channel. In Fig. 3, a state where the signaling channel is formed as a channel of the 3G cellular system via the base transceiver station 9 is shown by an arrow 20, and a state where the data channel is formed as a channel of the 3G cellular system via the.WLAN access point station 10 is shown by an arrow 21.

The operation is explained next. According to the present embodiment, the WLAN system is simply recognized as one radio data channel. The mobile terminal 1 is controlled via a signaling channel 20 using an existing channel of the 3G cellular system. The radio network controller 8 performs signaling according to the RAN standard of the 3G cellular system such as NBAP (3GPP TS25. 433) with respect to the base transceiver station 9 and RRC (3GPP TS25.331) with respect to the mobile terminal 1, and controls the mobile terminal 1 by the standard itself of the 3G cellular system. As shown in Fig. 3, even when the channel of the WLAN system is used as the data channel 21, the channel of the 3G cellular system is used as the signaling channel 20 at all times. Accordingly, the mobile terminal 1 performs signaling with the radio network controller 8 through the channel of the 3G cellular system at all times.

When the data channel 21 is switched from the one of the WLAN system to the one of the 3G cellular system, or from the one of the 3G cellular system to the one of the WLAN system, the radio network controller 8 executes the switching in a channel switching framework in the RAN standard of the 3G cellular system.

Thus, in the 3G cellular/WLAN according to the present embodiment, since the 3G cellular system has the access network unit that performs control, assuming that the WLAN system is the packet communication channel, integration of the 3G cellular system and the WLAN system can be easily performed at a low cost.

Furthermore, the UTRAN 2 as the access network unit has the radio network controller 8 connected to the base transceiver station 9 which can perform wireless communications with the mobile terminal 1 in the WLAN system and also electrically connected with the WLAN access point stations 10 and 11 of the WLAN system. Accordingly, network control in the 3G cellular system can be operated directly on the channel with a small improvement, and channel switching control lead by the 3G cellular system can be easily achieved.

Furthermore, the radio network controller 8 forms the signaling channel 20 of the 3G cellular system between the mobile terminal 1 and the radio network controller 8 via the base transceiver station 9, and forms the data channel 21 between the mobile terminal 1 and the radio network controller 8 via the access point station 10. Accordingly, WLAN channel setup control between the 3G cellular system and the wireless LAN lead by the 3G cellular system can be performed.

In other words, integration of the WLAN system with the 3G cellular system can be easily achieved based on the RAN standard of the current 3G cellular system. Further, a higher-speed access can be provided at a lower cost, as compared to building a system using HSDPA (High Speed Downlink Packet Access) or DSCH (Downlink Shared Channel) proposed as a high-speed packet channel of the 3G cellular system. Since the RAN control of the 3G cellular system is run as it is, channel switching between the WLAN and the 3G cellular system lead by the network can be achieved with a small improvement.

### Second Embodiment

To recognize the channel of the WLAN system as a channel usable without depending on the cell space of the 3G cellular system, the radio network controller 8 must be able to determine whether the mobile terminal 1 can use the WLAN channel at the current position with respect to a cell to which the mobile terminal 1 is going to camp. According to the present embodiment, therefore, the radio network controller 8 extends the measurement information notification in the RAN standard of the 3G cellular system, to achieve a determination unit that determines whether the mobile terminal 1 can use the WLAN channel, and includes the measurement result of the WLAN in the measurement information notification.

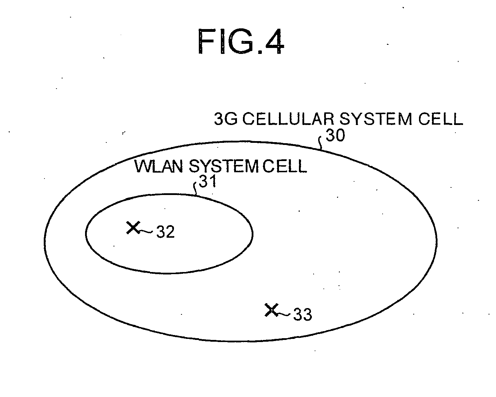

Fig. 4 depicts a range and a positional relationship of a cell of the 3G cellular system and a cell of the WLAN system indicated in association with the 3G cellular/WLAN shown in Fig. 2. In Fig. 4, a cell 31 covered by the WLAN access point station 10 (Fig. 2) of the WLAN system is present in a cell 30 covered by the base transceiver station 9 (Fig. 2) of the 3G cellular system. A position 32 is present within the coverage of the cell 30 of the 3G cellular system and the cell 31 of the WLAN system. Therefore, when the mobile terminal 1 is located at the position 32, the mobile terminal 1 is connectable both to the 3G cellular system and the WLAN system. On the other hand, since a position 33 is in the coverage of only the cell 30 of the 3G cellular system, the mobile terminal 1 located at the position 33 is connectable to the 3G cellular system, but not connectable to the WLAN system.

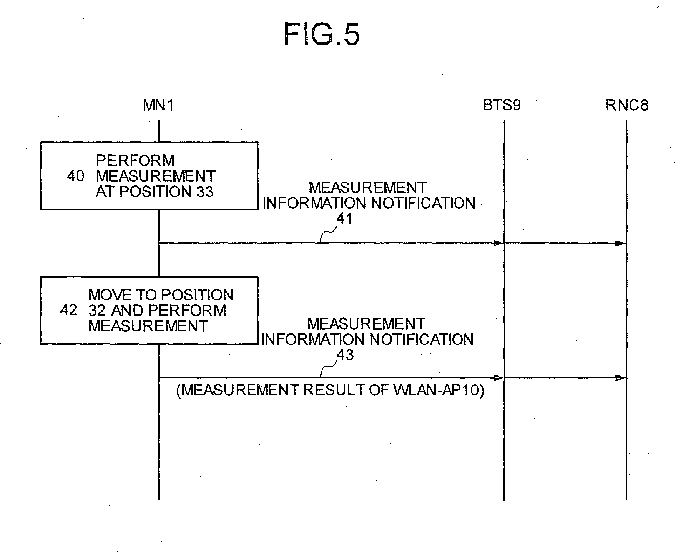

Fig. 5 is a sequence diagram for explaining how measurement information notifications 41 and 43 are transmitted from the mobile terminal 1 to the radio network controller 8. When the mobile terminal 1 is using an individual channel of the 3G cellular system, the mobile terminal 1 periodically executes measurement of the 3G cellular system cell. At a timing 40 in Fig. 5, the mobile terminal 1 is present at the position 33. Since the position 33 is in the coverage of the cell 30 of the 3G cellular system, the mobile terminal 1 sends the measurement information notification 41 in which only the measurement result of the 3G cellular system cell 30 is set as the measurement information to the radio network controller 8. Since only the measurement result of the 3G cellular system cell 30 is set in the measurement information notification 41 and a measurement result of the WLAN system is not set therein, the radio network controller 8 having received the measurement information notification 41 can determine that the current position of the mobile terminal 1 is in the coverage of the 3G cellular system cell 30 but not in the coverage of the WLAN system. At this point in time, when a data channel is set to the mobile terminal 1, since the mobile terminal 1 is not in the coverage of the WLAN system, the channel is always set using the 3G cellular system.

At a timing 42, the mobile terminal 1 moves to the position 32. Since the position 32 is in the coverage of both the 3G cellular system cell 30 and the WLAN system cell 31, the mobile terminal 1 sends a measurement information notification 43 in which measurement results of the 3G cellular system cell 30 and the WLAN system cell 31 are set to the radio network controller 8 as the measurement result. At this time, the measurement result of the WLAN system cell 31 includes signal strength from the WLAN access point station 10.

Since the measurement result of the 3G cellular system cell 30 and the measurement result of the WLAN system cell 31 are set in the measurement information notification 43, the radio network controller 8 having received the measurement information notification 43 can recognize that the current position of the mobile terminal 1 is in the coverage of both the 3G cellular system cell 30 and the WLAN system. Accordingly, at this point in time, when a data channel is set to the mobile terminal 1, the radio network controller 8 can determine that the data channel can be set not only to the 3G cellular system but also to the WLAN system.

Thus, in the 3G cellular/WLAN according to the present embodiment, the mobile terminal 1 performs measurement of the 3G cellular system and measurement of the WLAN system, and sends the measurement results to the radio network controller 8. Accordingly, channel setup control of the 3G cellular/WLAN lead by the 3G cellular system can be performed.

According to the present embodiment, the mobile terminal 1 uses the individual channel of the 3G cellular system as the signaling channel. However, the mobile terminal 1 can use a common channel of the 3G cellular system as the signaling channel. Similarly to the above, it suffices that the mobile terminal 1 notifies the measurement information of the WLAN access point station in the measurement information notification.

### Third Embodiment

In the second embodiment, the measurement of the WLAN system is performed regardless of the current position of the mobile terminal 1, whereas according to the present embodiment, a system information notification of the 3G cellular system instructs as to whether the measurement of the WLAN system is necessary at the current position of the mobile terminal 1.

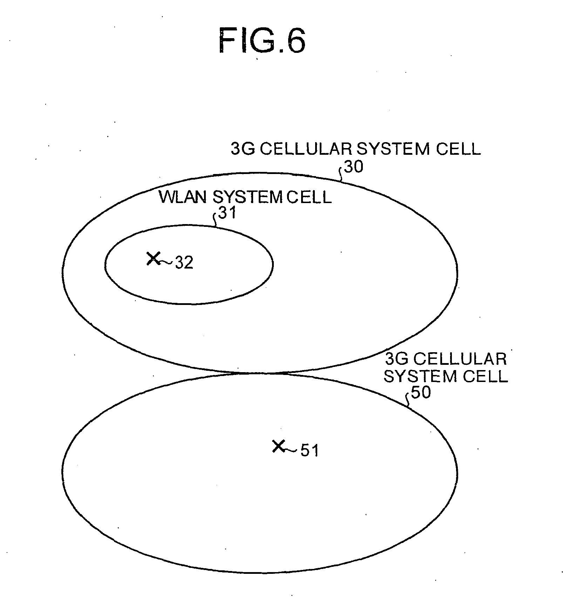

Fig. 6 depicts a range and a positional relationship of cells of the 3G cellular/WLAN system and a cell of the WLAN system indicated in association with the 3G cellular/WLAN shown in Fig. 2. In Fig. 6, an area covered by the WLAN system is not present in a cell 50 covered by the base transceiver station 9 (Fig. 2) of the 3G cellular system. The cell 31 covered by the WLAN access point station 10 (Fig. 2) is present in the cell 30 covered by the base transceiver station 9 using another frequency.

According to such a positional relationship, since a position 51 is within the coverage of the 3G cellular system cell 50, the mobile terminal 1 is connectable to the 3G cellular system. However, it is not connectable to the WLAN system. On the other hand, since there is no WLAN system cell in the coverage of the 3G cellular system cell 50, the measurement of the WLAN system is not required.

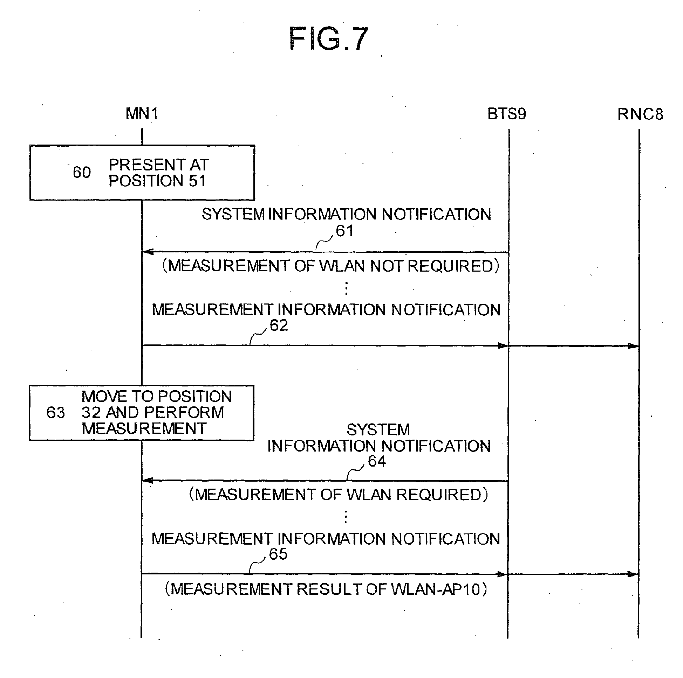

Fig. 7 is a sequence diagram for explaining how the system information notification is transmitted from the base transceiver station 9 to the mobile terminal 1, and how the measurement information notification is transmitted from the mobile terminal 1 to the radio network controller 8. At a timing 60 in Fig. 7, the mobile terminal 1 is present at the position 51. At the position 51, a system information notification 61 is transmitted from the base transceiver station 9. In the system information notification 61, information relating to whether to measure the WLAN system is set. Since there is no WLAN system cell in the coverage of the 3G cellular system cell 50, the measurement of the WLAN system is not required. Therefore, "no measurement required" is set in the system information notification 61, relating to whether to measure the WLAN system. The mobile terminal 1 having received the system information notification 61 does not perform the measurement of the WLAN system by referring to "no measurement required". A measurement result of the WLAN system is not set in a measurement information notification 62.

At a timing 63, the mobile terminal 1 moves to the position 32. Since there is a WLAN system cell in the coverage of the 3G cellular system cell 30, the measurement of the WLAN system is performed to determine whether the WLAN system can be used. Therefore, in a system information notification 64 from the base transceiver station 9, "measurement required" is set relating to whether to measure the WLAN system. The mobile terminal 1 having received the system information notification 64 performs the measurement of the WLAN system by referring to "measurement required", and sets the measurement result of the WLAN system in a measurement information notification 65.

As described above, in the 3G cellular/WLAN according to the present embodiment, the radio network controller 8 sends a measurement condition relating to the wireless LAN system together with the information of each cell to the mobile terminal 1 in the system information notification, and the mobile terminal 1 performs measurement according to the measurement condition relating to the wireless LAN system. Since the system information, which instructs whether to perform the measurement of the WLAN system at the current position of the mobile terminal 1, is sent to the mobile terminal 1, a measurement load of the mobile terminal 1 can be reduced.

### Fourth Embodiment

In the third embodiment, it is instructed whether the measurement of the WLAN system is required at the current position of the mobile terminal 1 by notifying the system information of the 3G cellular system to the mobile terminal 1, whereas according to the present embodiment, an ESSID (Extended Service Set Identifier) of the WLAN access point station to be measured is instructed to the mobile terminal 1 by notifying the system information of the 3G cellular system to the mobile terminal 1, to narrow down the measurement condition of the WLAN system.

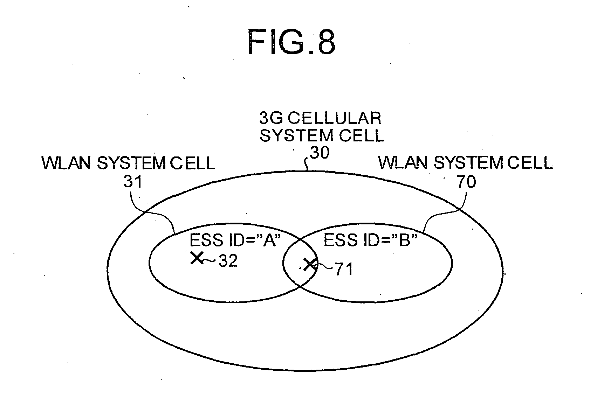

Fig. 8 depicts a range and a positional relationship of a third-generation mobile communication cell and wireless LAN cells indicated in association with the third-generation mobile-communication/wireless-LAN integration system shown in Fig. 2. In Fig. 8, "B" is set to a WLAN system cell 70 as the ESSID, and "A" is set to a WLAN system cell 31 as the ESSID. In the WLAN system cell 70, radio quality degrades due to an increase in communication traffic, and a network operator indicates a cell, to which user connection is to be rejected. In Fig. 8, since a position 71 is in the coverage of the 3G cellular system cell 30, the mobile terminal 1 is connectable not only to the 3G cellular system, but also to the WLAN system, since it is in the coverage of the WLAN system cells 31 and 70.

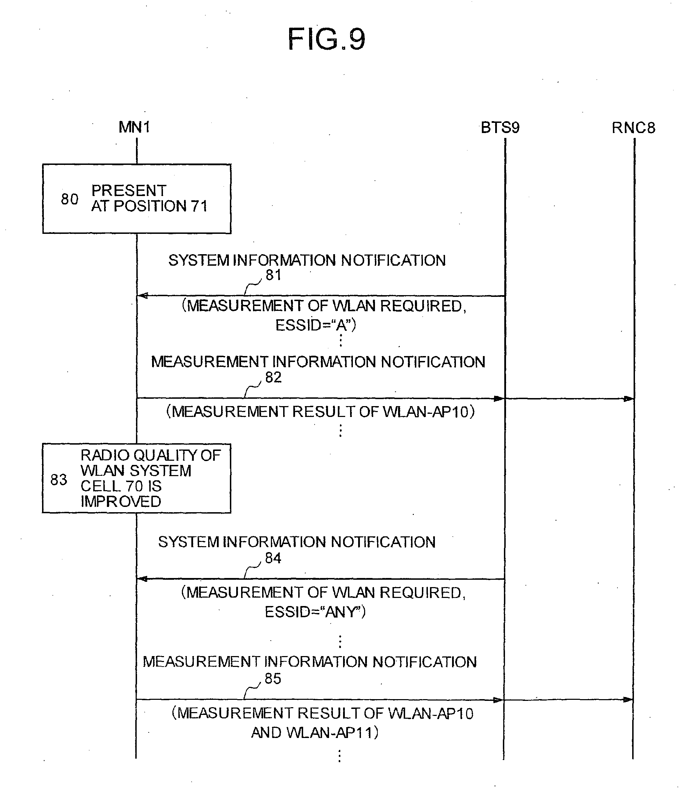

Fig. 9 is a sequence diagram in which the base transceiver station 9 transmits a system information notification and the mobile terminal 1 transmits a measurement information notification to the radio network controller 8. At a timing 80, the mobile terminal 1 is present at the position 71. At the position 71, a system information notification 81 is transmitted to the mobile terminal 1 from the base transceiver station 9, in which whether to measure the WLAN system and the ESSID of the WLAN access point station to be measured are set. As the WLAN system cell present in the coverage of the 3G cellular system cell 30, there are WLAN system cells 31 and 70. However, since the radio quality of the WLAN system cell 70 degrades and user connection should be rejected, it is unnecessary to measure the WLAN system cell 70 and to send the measurement result to the radio network controller 8. Accordingly, to exclude the ESSID="B" of the WLAN system cell 70 from the measuring objects, "A" is set as the ESSID in the system information notification 81. The mobile terminal 1 having received the system information notification 81 refers to the set value "A" of the ESSID, to measure the WLAN system having the ESSID="A", and sets only the measurement result of the WLAN system having the ESSID="A".

A case that, at a timing 83, the radio quality of the WLAN system cell 70 is improved and user connection is allowed to the WLAN system cell 70 is explained next. At this time, "ANY" is set as the ESSID in a system information notification 84. The "ANY" indicates that all ESSIDs are set as the measuring objects. Therefore, the mobile terminal 1 having received the system information notification 84 refers to the set value "ANY" of the ESSID, to measure the WLAN system without putting any limitation on the ESSID. The mobile terminal 1 present at the position 71 sets the measurement results of not only the 3G cellular system cell 30 and the WLAN system cell 31 but also the WLAN system cell 70 in a measurement information notification 85, and sends the notification to the radio network controller 8.

Thus, the measurement load on the mobile terminal can be reduced by instructing the ESSID of the WLAN system to be measured by the system information notification of the 3G cellular system, and measurement information not required is removed from the measurement information notification 85, thereby reducing the load on the network. That is, in the 3G cellular/WLAN according to the present embodiment, the radio network controller 8 notifies the measurement condition relating to the wireless LAN system to the mobile terminal 1 together with the information of each cell in the system information notification, and the mobile terminal 1 performs measurement according to the measurement condition relating to the wireless LAN system.

According to the present embodiment, the "ANY" is set as the ESSID information in the system information notification 84. However, a plurality of ESSIDs can be specified in a list format, such as both "A" and "B". Fifth Embodiment

According to the present embodiment, BSSID (Basic Service Set Identifier) information of the WLAN access point station is added to WLAN system measurement result information in the measurement information notification transmitted from the mobile terminal 1. When the channel of the WLAN system can be used, the radio network controller 8 refers to the measurement information notification transmitted from the mobile terminal, to select one WLAN access point station based on the BSSID. Information of the selected WLAN access point station is transmitted to an MS through a WLAN channel setup procedure of the 3G cellular system, thereby setting a WLAN channel.

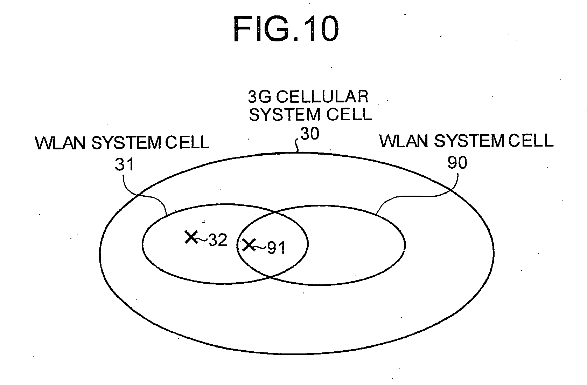

Fig. 10 depicts a range and a positional relationship of a third-generation mobile communication cell and wireless LAN cells indicated in association with the third-generation mobile-communication/wireless-LAN integration system shown in Fig. 2. In Fig. 10, since a position 91 is in the coverage of the 3G cellular system cell 30, the mobile terminal 1 is connectable not only to the 3G cellular system, but also to,the WLAN system, since it is in the coverage of the WLAN system cells 31 and 90.

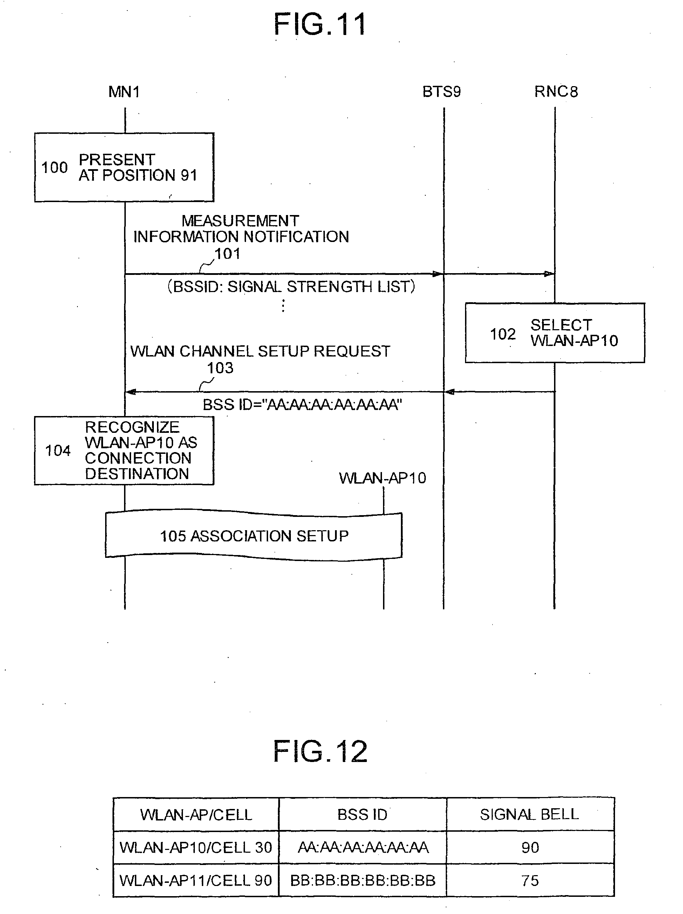

Fig. 11 is a sequence diagram for explaining how the radio network controller 8 on the network side selects a WLAN access point station to be connected and sets a WLAN system channel.

Fig. 12 is a chart indicating WLAN measurement result set in the measurement information notification transmitted to the radio network controller 8, when the mobile terminal 1 is present at the position 91. At this time, signal level of the WLAN system cell 31 is "90" and the BSSID of the WLAN access point station 10 in the WLAN system cell 31 is "AA:AA:AA:AA:AA:AA"; and signal level of the WLAN system cell 70 is "75" and the BSSID of the WLAN access point station 11 in the WLAN system cell 90 is "BB:BB:BB:BB:BB:BB". The signal level becomes better as the value becomes larger, and the radio network controller 8 can be determined from the measurement result that when a channel is set to the WLAN system, it is better to connect to the WLAN system cell 31, that is, to the WLAN access point station 10.

The present embodiment is explained with reference to Fig. 2, and Figs. 10 to 12. At a timing 100 in Fig. 12, the mobile terminal 1 is present at the position 91. At the position 91, the mobile terminal 1 transmits a measurement information notification 101 to the radio network controller 8, in which not only a measurement result of the 3G cellular system but also a measurement result of the WLAN system shown in Fig. 12 are set as measurement information. The radio network controller 8 having received the measurement information notification 101 selects the WLAN system cell 31, that is, the WLAN access point station 10 based on the measurement result of the WLAN system in Fig. 11. At a timing 102, the radio network controller 8 having selected the WLAN access point station 10 sets "AA:AA:AA:AA:AA:AA", which is the BSSID of the WLAN access point station 10, as the BSSID in a WLAN system channel setup request 103, and transmits the WLAN system channel setup request 103 to the mobile terminal 1.

At a timing 104, the mobile terminal 1 having received the WLAN system channel setup request 103 recognizes the WLAN access point station 10 as a connection destination, and performs an association setup 105 to set the channel of the WLAN system, to connect to the WLAN access point station 10.

Thus, in the 3G cellular/WLAN according to the present embodiment, the radio network controller 8 selects an access point station to be connected to the mobile terminal 1 based on the measurement information from the mobile terminal 1, the selection result is transmitted to the mobile terminal 1, and the mobile terminal 1 accesses the access point station based on the selection result. Therefore, when a channel is set to the WLAN system, the WLAN access point station, which is the connection destination of the mobile terminal, can be determined, lead by the network.

In the above example, when the WLAN access point station is selected at the timing 102, only the measurement information notification 101 from the mobile terminal 1 is used, but measurement information such as a load status of the traffic can be obtained from the network side such as the WLAN access point station, and can be used as a condition of selecting the WLAN access point station. Sixth Embodiment

In the fifth embodiment, the selection of the WLAN access point station is performed by the radio network controller 8, whereas according to the present embodiment, selection of the WLAN access point station is performed by a wireless LAN probe procedure of the mobile terminal, and the radio network controller 8 determines whether to use the WLAN system channel.

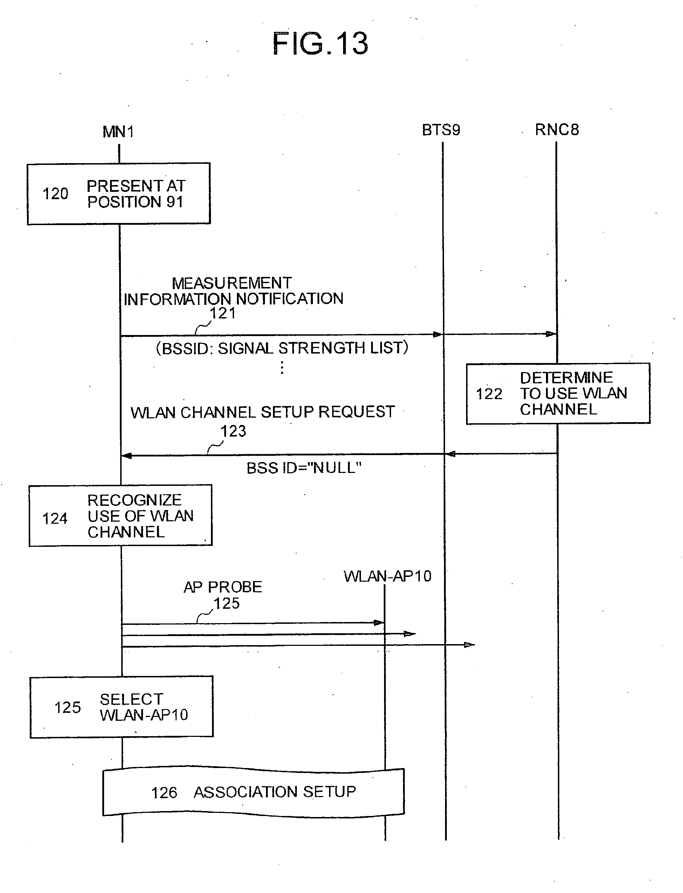

Fig. 13 is a sequence diagram for explaining a case that the radio network controller 8 on the network side determines whether to use the WLAN system channel, and the mobile terminal 1 selects the WLAN access point station to be actually connected.

The present embodiment is explained with reference to Figs. 2, 10, 12, and 13. At a timing 120 in Fig. 13, the mobile terminal 1 is present at the position 91. At the position 91, the mobile terminal 1 transmits a measurement information notification 121 to the radio network controller 8, in which not only a measurement result of the 3G cellular system cell 30 but also a measurement result of the WLAN system shown in Fig. 11 are set as measurement information.

The radio network controller 8 having received the measurement information notification 121 can recognize the signal level of the WLAN system cell 31 and the WLAN system cell 70. If a determination reference is set that when the signal level is 60 or higher, the WLAN system channel can be selected, at a timing 122, the radio network controller 8 determines to use the WLAN system channel.

At the timing 122, the radio network controller 8 having determined to use the WLAN system channel sets "NULL" as the BSSID in a WLAN system channel setup request 123 with respect to the mobile terminal 1 and transmits the WLAN system channel setup request 123 to the mobile terminal 1. Since the BSSID="NULL" means that a particular WLAN access point station is not specified, at a timing 124, the mobile terminal 1 having received the WLAN system channel setup request 123 performs wireless LAN probe 125 to probe for a WLAN access point station to be connected.

At a timing 126, the mobile terminal 1 selects the WLAN access point station 10 to be connected according to the procedure of the wireless LAN probe 125, and performs association setup 126 to set the channel of the WLAN system.

In the 3G cellular/WLAN according to the present embodiment, the radio network controller 8 notifies the mobile terminal 1 that a system to be connected with the mobile terminal 1 is the wireless LAN system based on the measurement information from the mobile terminal 1, and the mobile terminal 1 probes for the access point station to be connected according to the wireless LAN probe procedure and connects thereto. Accordingly, when a channel is set to the WLAN system, it can be determined under control lead by the network whether to connect to the WLAN system.

### Seventh Embodiment

According to the present embodiment, MAC frame transfer is achieved by signaling of the 3G cellular system so that the mobile terminal 1 and the radio network controller 8 exchange MAC address information. The 3G cellular system cell is controlled by one radio network controller. Therefore, the MAC address of the radio network controller 8 is notified to the mobile terminal 1 and the MAC address of the mobile terminal 1 is notified to the radio network controller 8 by an RRC Connection setup procedure. Accordingly, the MAC addresses are mutually exchanged between the mobile terminal 1 and the radio network controller 8.

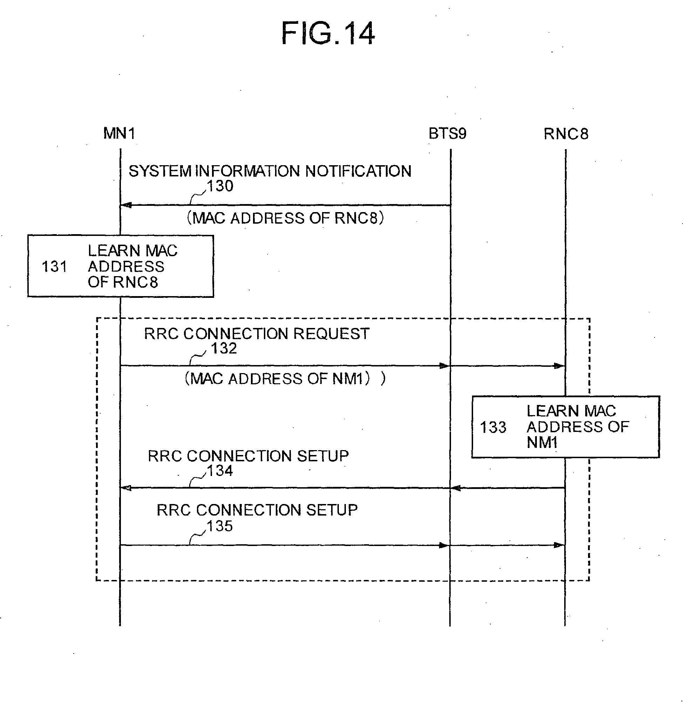

Fig. 14 is a sequence diagram for explaining how the MAC addresses are exchanged between the mobile terminal 1 and the radio network controller 8 by the signaling procedure of the 3G cellular system.

The operation is explained with reference to Figs. 2 and 14. In Fig. 14, the base transceiver station 9 transmits a system information notification 130 to the mobile terminal 1, in which the MAC address of the radio network controller 8 is set. The mobile terminal 1 having received the system information notification 130 learns the MAC address of the radio network controller 8 at a timing 131.

Thereafter, when the mobile terminal 1 sets signaling connection of the 3G cellular system, the mobile terminal 1 performs the RRC Connection setup procedure. First, the mobile terminal 1 transmits a RRC Connection Setup Request 132 to the radio network controller 8. The MAC address of the mobile terminal 1 is set in the RRC connection setup request 132.

The radio network controller 8 having received the RRC Connection Setup Request 132 learns the MAC address of the mobile terminal 1 at a timing 133. Thereafter, the RRC Connection setup procedure is complete in order of an RRC Connection setup 134 and an RRC Connection Setup Complete 135. According'to this procedure, the MAC addresses can be exchanged between the mobile terminal 1 and the radio network controller 8, and MAC frame transfer in conformity with IEEE 802.11 becomes possible between the mobile terminal 1 and the radio network controller 8 without performing the ARP processing.

Thus, in the 3G cellular/WLAN according to the present embodiment, the mobile terminal 1 and the radio network controller 8 exchange the MAC address information.by the signaling channel. By exchanging the MAC addresses by the signaling of the 3G cellular system, communication connection can be established.

### Eighth Embodiment

In the seventh embodiment, the MAC addresses are exchanged by the signaling of the 3G cellular system, whereas according to the present embodiment, the MAC address is notified on the WLAN channel, to exchange the MAC addresses between the mobile terminal 1 and the radio network controller 8.

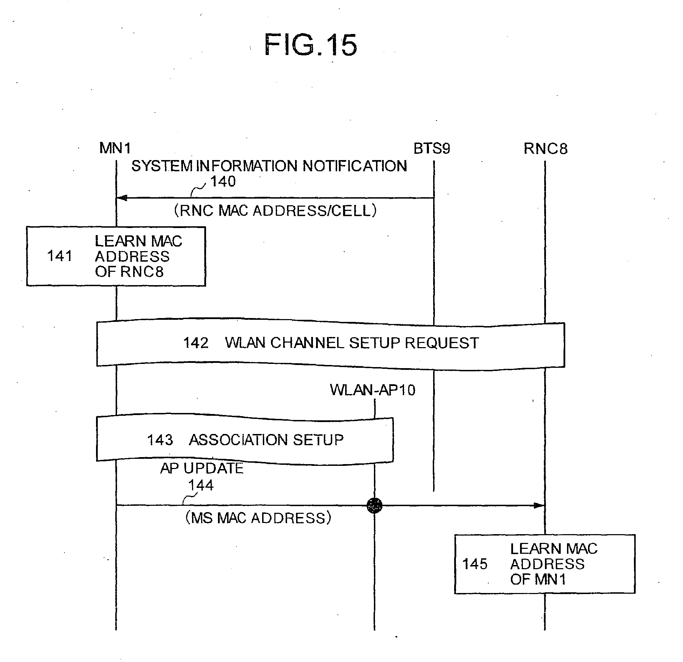

Fig. 15 is a sequence diagram for explaining how the MAC addresses are exchanged between the mobile terminal 1 and the radio network controller 8 on the WLAN system channel. When the WLAN system channel is to be set, it is assumed that the mobile terminal 1 connects to the WLAN access point station 10.

The operation is explained with reference to Figs. 2 and 15. In Fig. 15, the base transceiver station 9 transmits a system information notification 140 to the mobile terminal 1, in which the MAC address of the radio network controller 8 is set. The mobile terminal 1 having received the system information notification 140 learns the MAC address of the radio network controller 8 at a timing 141.

Thereafter, when a WLAN system channel setup request procedure is performed at a timing 142, an association setup procedure 143 is executed between the mobile terminal 1 and the WLAN access point station 10.

Thereafter, the MAC address of the mobile terminal 1 is notified by an AP Update 144, which is a specific message. This message is transmitted to the radio network controller 8 via the WLAN access point station 10, with which the mobile terminal 1 sets an association. Accordingly, an L2 switch entity (including an L2 interface of the radio network controller 8) relating to the communication from the WLAN access point station 10 to the radio network controller 8 can learn correspondence between the MAC address of the mobile terminal 1 and an interface directed to the MAC address of the mobile terminal 1.

Thus, in the 3G cellular/WLAN according to the present embodiment, when the mobile terminal 1 transmits the MAC address information to the radio network controller 8, the mobile terminal 1 performs communications using own specific message. Therefore, when the mobile terminal selects the WLAN access point station, the mobile terminal has a function of transmitting the selection information of the WLAN access point station to the radio network controller, thereby enabling establishment of the communication connection.

### Ninth Embodiment

According to the present embodiment, the WLAN system channel is established by an RB Setup procedure, which is the signaling of the 3G cellular system.

Fig.' 16 is a sequence diagram for explaining how the WLAN system channel is established by a radio bearer setup (hereinafter, "RB Setup") procedure, which is the signaling of the 3G cellular system.

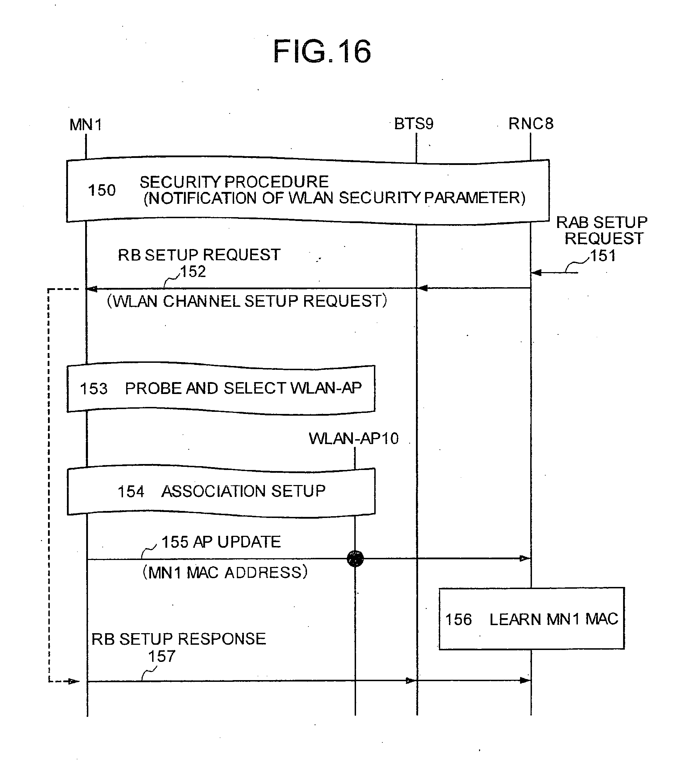

The operation is explained with reference to Figs. 2 and 16. In Fig. 16, before performing the RB Setup procedure, a security procedure 150 is performed as required. When there is the possibility of using the WLAN system, a security parameter of the WLAN system is notified in addition to a security parameter of the 3G cellular system in the security procedure 150. As the security parameter information of the WLAN system, information such as a WEP (Wired Equivalent Privacy) key is inserted. The radio network controller 8 receives an RAB Setup request 151 from the GPRS core network, and starts an operation to set the RAB as the WLAN system channel based on the request. The radio network controller 8 transmits an RB Setup request 152 to the mobile terminal 1, in which setup of the WLAN system channel is instructed.

With regard to the RB Setup request 152, there are cases that the WLAN access point station to be connected is explicitly specified and not explicitly specified. According to the present embodiment, a case that the WLAN access point station to be connected is not explicitly specified is explained.

The mobile terminal 1 having received the RB Setup request 152 determines that a setup of a WLAN system channel is requested, probes for a WLAN access point station at a timing 153 to select a WLAN access point station, and, at a timing 154, sets an association with the WLAN access point station 10. When the mobile terminal 1 has not yet notified the radio network controller 8 of the own MAC address, the mobile terminal 1 notifies the radio network controller 8 of the own MAC address according to procedures 155 and 156. Upon establishment of communication connection to the WLAN system, the mobile terminal 1 transmits an RB Setup Response 157 to the radio network controller 8, to notify that a WLAN system channel has been set up.

Thus, in the 3G cellular/WLAN according to the present embodiment, after notifying the security parameter of the 3G cellular system and the security parameter of the WLAN system to the radio network controller 8, the mobile terminal 1 uses the wireless bearer setup procedure of the 3G cellular system, to form the WLAN system channel. Thus, the WLAN system channel can be established by the RB Setup procedure of the 3G cellular system.

### Tenth Embodiment

Since the 3G cellular system cell and the WLAN system cell are independent of each other, the timing of a handover operation in the 3G cellular system and the timing of the WLAN handover operation is basically independent of each other. The handover operation in the 3G cellular system conforms to the specification of 3GPP. According to the present embodiment, handover control of the WLAN system channel lead by the 3G cellular system is explained.

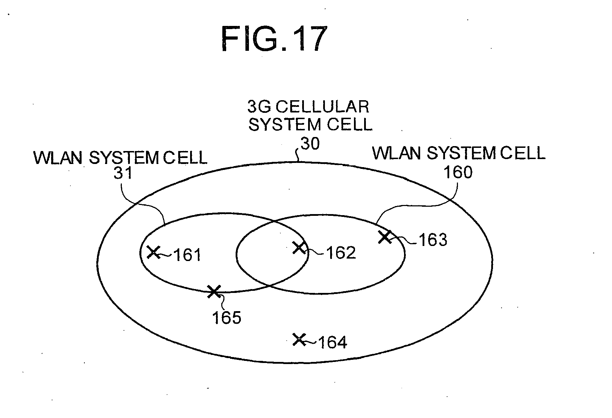

Fig. 17 depicts a range and a positional relationship of a third-generation mobile communication cell and wireless LAN cells indicated in association with the third-generation mobile-communication/wireless-LAN integration system shown in Fig. 2. There is a cell 160 of the WLAN system covered by the WLAN access point station 11 (Fig. 2). At a position 161, since it is in the coverage of the WLAN system cell 31, a WLAN system channel is set via the WLAN access point station 10. At a position 162, since the measurement result of the WLAN system is better (the signal strength is stronger) in the WLAN system cell 160 than in the WLAN system cell 31, the WLAN system channel should be set via the WLAN access point station 11.

At a position 163, since it is in the coverage of the WLAN system cell 160, the WLAN system channel should be set via the WLAN access point station 11.

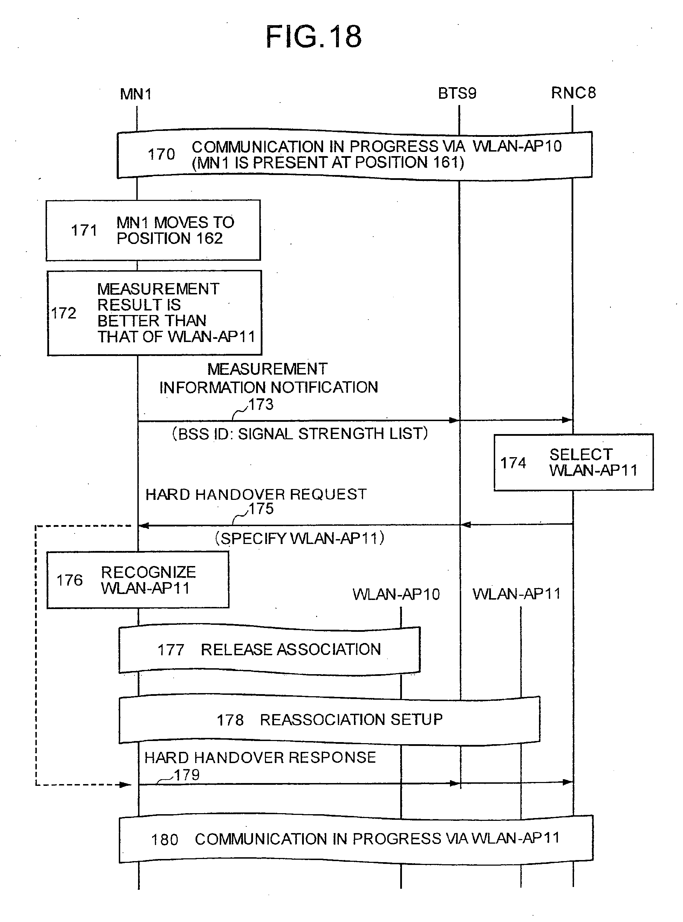

Fig. 18 is a sequence diagram for explaining hard handover control of the WLAN system channel lead by the network. The operation is explained with reference to Figs. 2, 17, and 18. In Fig. 18, at a timing 170, the mobile terminal 1 is present at the position 161, and is communicating via the WLAN access point station 10.

At a timing 171, since the mobile terminal 1 moves to the position 162, the signal strength becomes stronger in the WLAN system cell 160 covered by the WLAN access point station 11 than in the WLAN system cell 31 covered by the WLAN access point station 10. The mobile terminal 1 transmits this result to the radio network controller 8 in a measurement information notification 173.

The radio network controller 8 having received the measurement information notification 173 selects, at a timing 174, the WLAN access point station 11 as a connection destination of the mobile terminal 1. The radio network controller 8 transmits a hard handover request 175 specifying the WLAN access point station 11 as a handover destination to the mobile terminal 1.

Upon reception of the hard handover request 175, the mobile terminal 1 recognizes the WLAN access point station 11 as the connection destination, and after performing a release association 177 with the WLAN access point station 10, executes a reassociation setup 178 with the WLAN access point station 11.

Upon establishment of a reassociation with the WLAN access point station 11, the mobile terminal 1 transmits a hard handover response 179 to the radio network controller 8, to notify the completion of the hard handover request 175. Thereafter, the mobile terminal 1 communicates via the WLAN access point station 11.

Thus, in the 3G cellular/WLAN according to the present embodiment, the mobile terminal 1 transmits the measurement information of an adjacent access point station to the radio network controller 8, and the radio network controller 8 switches the access point station based on the information. In other words, when switching of the access point station is performed lead by the network of the 3G cellular system, the mobile terminal transmits the measurement information of the adjacent access point station to the radio network controller, and the WLAN access point station is changed over according to the determination of the radio network controller, to perform hard handover. In this case, seamless WLAN access point station switching can be achieved based on the determination of the radio network controller, which is the network side in the 3G cellular system.

Although not shown in Fig. 18, when the mobile terminal switches the WLAN access point station, IAPP (inter-access point station protocol) can operate simultaneously between WLAN access point stations.

### Eleventh Embodiment

In the tenth embodiment, hard handover control of the WLAN system channel lead by the network of the 3G cellular system is shown, whereas according to the present embodiment, the hard handover control of the WLAN system channel lead by the mobile terminal is shown.

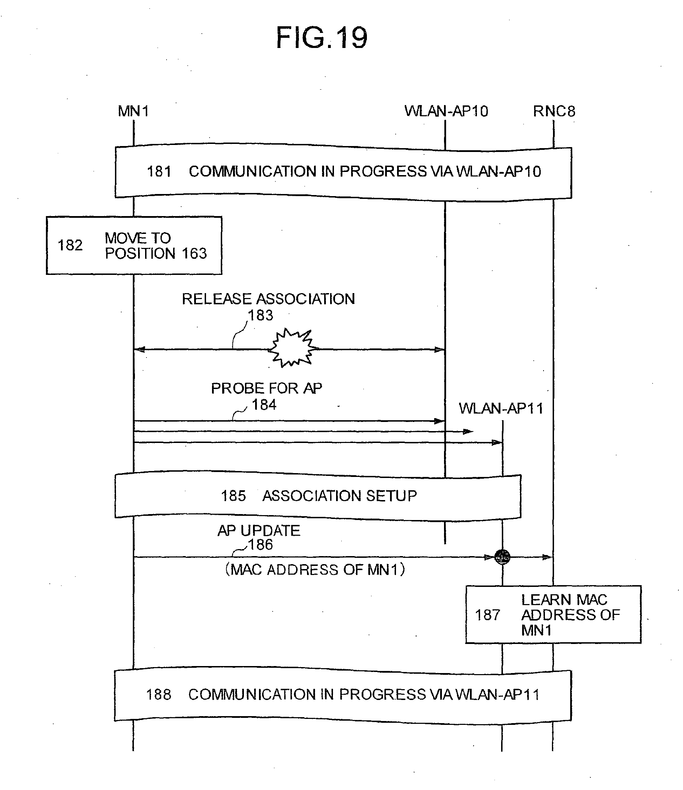

Fig. 19 is a sequence diagram for explaining the hard handover control of the WLAN system channel lead by the mobile terminal.

The operation is explained with reference to Figs. 2, 17, and 19. At a timing 181 in Fig. 19, the mobile terminal 1 is present at the position 161, and is communicating via the WLAN access point station 10.

At a timing 182, since the mobile terminal 1 moves to the position 163, the mobile terminal 1 is away from the coverage of the WAN system cell 31 covered by the WLAN access point station 10, and the association with the WLAN access point station 10 is released at a release 183. Accordingly, the mobile terminal 1 performs a WLAN probe 184.

Since the mobile terminal 1 is present at the position 163, which is in the coverage of the WLAN system cell 160, and the mobile terminal 1 can find the WLAN access point station 11. Therefore, the mobile terminal 1 performs an association setup 185 with the WLAN access point station 11. The mobile terminal 1 also transmits the MAC address of the mobile terminal 1 to the radio network controller 8 by an access point station update 186, and the radio network controller 8 learns the MAC address of the mobile terminal 1, thereby establishing communication connection. Accordingly, the mobile terminal 1 communicates via the WLAN access point station 11 at a timing 188.

Thus, in the 3G cellular/WLAN according to the present embodiment, the mobile terminal 1 switches the access point station according to the own determination, and transmits the switching information to the radio network controller 8. In the case of access point station switching lead by the mobile terminal, the radio network controller 8 relearns a packet transmission address with respect to the mobile terminal 1, thereby enabling achievement of hard handover lead by the mobile terminal.

### Twelfth Embodiment

According to the present embodiment, when a user moves from an area where the user cannot catch the WLAN system channel to an area where the WLAN system channel is available, switching from the 3G cellular system to the WLAN system is achieved based on a Channel Switching procedure of the 3G cellular system.

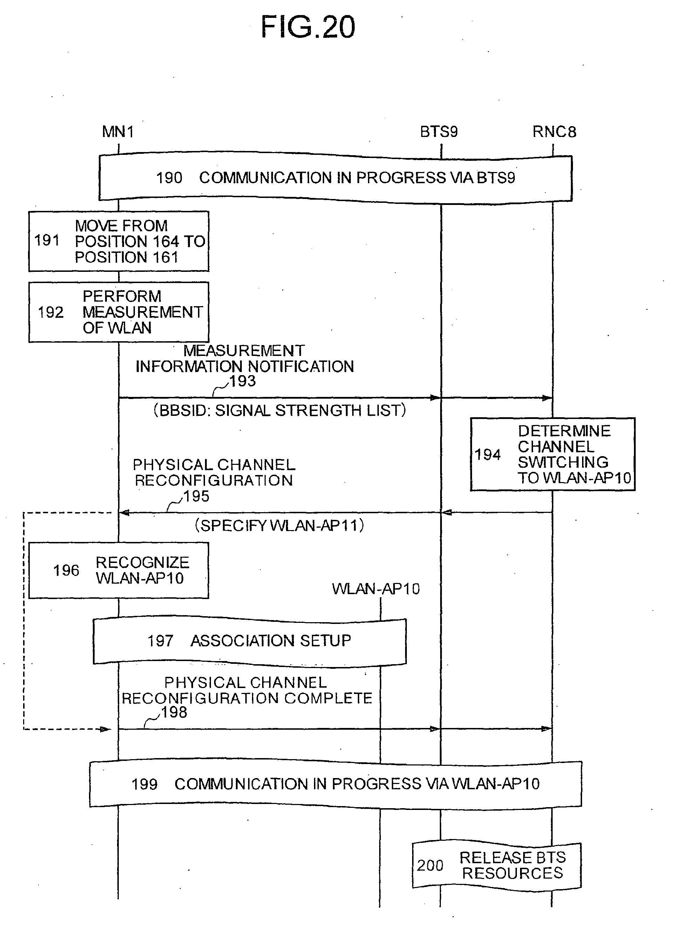

Fig. 20 is a sequence diagram when switching from the 3G cellular system to the WLAN system is performed based on the Channel Switching procedure of the 3G cellular system.

The operation is explained with reference to Figs. 2, 17, and 20. At a timing 190 in Fig. 20, the mobile terminal 1 is present at a position 164. The position 164 is in the coverage of the 3G cellular system cell 30, but not in the coverage of the WLAN system cell. Therefore, at the timing 190, while the mobile terminal 1 uses a channel of the 3G cellular system, communication 190 is in progress via the base transceiver station 9.

The mobile terminal 1 moves from the position 164 to the position 161. A measurement 192 at the position 161 is performed with respect to not only the 3G cellular system cell 30 but also the WLAN system cell 31 covered by the WLAN access point station 10. The mobile terminal 1 transmits a measurement result of the measurement 192 to the radio network controller 8 in a measurement information notification 193.

Upon reception of the measurement information notification 193, the radio network controller 8 selects channel switching to the WLAN access point station 10 at a timing 194. The radio network controller 8 transmits to the mobile terminal 1 a Physical Channel Reconfiguration 195 instructing the WLAN access point station 10 as a channel switching destination. Upon reception of the Physical Channel Reconfiguration 195, the mobile terminal 1 recognizes the WLAN access point station 10, as the channel switching destination, and executes an association setup 197 with the WLAN access point station 10. After establishing the association, the mobile terminal 1 transmits Physical Channel Reconfiguration Complete 198 to the radio network controller 8, to notify completion of channel switching. Thereafter; the mobile terminal 1 communicates via the WLAN access point station 10. Upon reception of the Physical Channel Reconfiguration Complete 198, the radio network controller 8 releases the resources of the base transceiver station 9 at a timing 200.

Thus, in the 3G cellular/WLAN according to the present embodiment, the radio network controller 8 performs switching from the channel of the 3G cellular system to the channel of the WLAN system by the signaling of the 3G cellular system. Thus, switching from the channel of the 3G cellular system to the channel of the WLAN system can be achieved based on the Channel Switching procedure of the 3G cellular system.

### Thirteenth Embodiment

According to the present embodiment, when the user moves from an area where the WLAN system channel is available to an area where the user cannot catch the WLAN system channel, switching from the WLAN system to the 3G cellular system is achieved based on the Channel Switching procedure of the 3G cellular system.

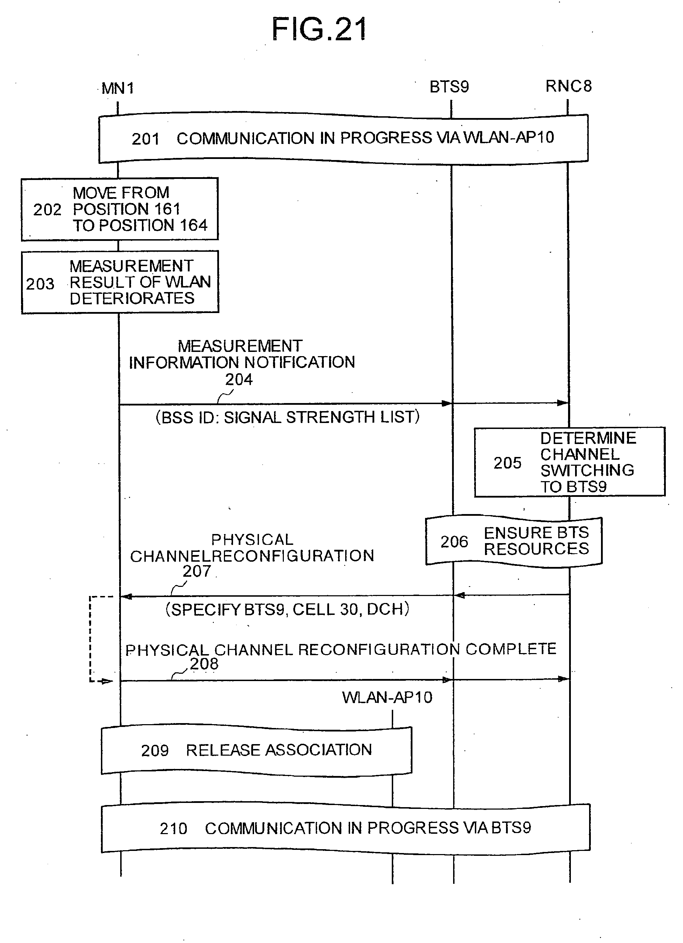

Fig. 21 is a sequence diagram when switching from the WLAN system to the 3G cellular system is achieved based on the Channel Switching procedure of the 3G cellular system.

The operation is explained with reference to Figs. 2, 17, and 21. At a timing 201 in Fig. 20, the mobile terminal 1 is present at the position 161. The position 161 is in the coverage of the 3G cellular system cell 30, and also in the coverage of the WLAN system cell 31. Therefore, the mobile terminal 1 uses the channel of the WLAN system to perform communication 201 via the WLAN access point station 10.

At a timing 202, the mobile terminal 1 moves from the position 161 to a position 165. It is assumed that in a measurement 203 at the position 165, although the measurement of the WLAN system cell 31 covered by the WLAN access point station 10 is possible, the measurement result is not good. The mobile terminal 1 transmits a result of the measurement 203 to the radio network controller 8 in a measurement information notification 204. Upon reception of the measurement information notification 204, the radio network controller 8 selects channel switching to the 3G cellular system cell 30 covered by the base transceiver station 9 at a timing 205. The radio network controller 8 ensures the resources 206 of the base transceiver station 9 by an NBAP procedure. The radio network controller 8 then transmits Physical Channel Reconfiguration 207, to the mobile terminal 1, specifying the cell 30 covered by the base transceiver station 9 as the channel switching destination. Upon reception of Physical Channel Reconfiguration 207, the mobile terminal 1 executes channel switching to the 3G cellular system cell 30 covered by the base transceiver station 9 and transmits Physical Channel Reconfiguration Complete 208 to the radio network controller 8. Further, the mobile terminal 1 performs a release association 209 with the WLAN access point station 10, and can communicate via the base transceiver station 9

Thus, in the 3G cellular/WLAN according to the present embodiment, the radio network controller 8 performs switching from the channel of the WLAN system to the channel of the 3G cellular system by the signaling of the 3G cellular system. Therefore, switching from the channel of the WLAN system to the channel of the 3G cellular system can be achieved based on the Channel Switching procedure of the 3G cellular system.

### Fourteenth Embodiment

According to the present embodiment, paging of the 3G cellular system is used for supplying power to the WLAN system only when it is required, to reduce the power consumption of the WLAN system.

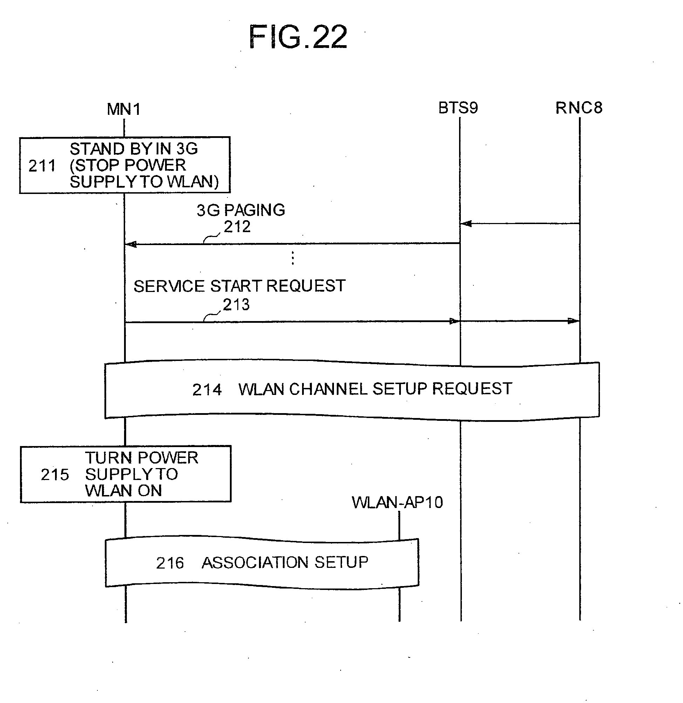

Fig. 22 is a sequence diagram when the power consumption of the WLAN system is reduced by the paging of the 3G cellular system.

The operation is explained with reference to Fig. 22. At a timing 211 in Fig. 22, the mobile terminal 1, which is not performing transfer of user data, stops power supply to the WLAN system, and is in a waiting mode of the 3G cellular system. When there is a call-in request with respect to the mobile terminal 1, Paging 212 is transmitted from the base transceiver station 9 to the mobile terminal 1. Upon reception of Paging 212, the mobile terminal 1 understands that a calling target is the mobile terminal 1 itself, and transmits a service start request 213, which is a response to the Paging 212, to the radio network controller 8. Upon reception of the service start request 213, the radio network controller 8 performs a procedure of a WLAN system channel setup request 214. The mobile terminal 1 having started the procedure of the WLAN system channel setup request 214, starts to supply power to the WLAN system at this timing, to perform association setup with the WLAN access point station 10.

In the 3G cellular/WLAN according to the present embodiment, the mobile terminal 1 stands by in the waiting mode of the 3G cellular system, and when the mobile terminal 1 is going to use the channel of the WLAN system, the mobile terminal 1 uses signaling of the 3G cellular system.

Thus, since the paging function of the 3G cellular system is used for calling the mobile terminal 1, power is supplied to the WLAN system only when it is necessary, thereby enabling reduction of the power consumption in the WLAN system.

According to the present embodiment, the operation sequence at the time of call-in has been explained. However, at the time of call-out from the mobile terminal 1 in the waiting mode of the 3G cellular system, by supplying the power to the WLAN system at the timing when the procedure of WLAN system channel setup request is started, power consumption in the WLAN system can be reduced likewise.

### Fifteenth Embodiment

In the first embodiment described above, the radio network controller is connected to the WLAN access point station so that the WLAN system is used as one high-speed packet channel of the 3G cellular system, by connecting the radio network controller to the WLAN access point station and controlling the connection. Whereas according to the present embodiment, the radio network controller is connected to the WLAN access point station, and the radio network controller and the base transceiver station control the WLAN access point station, so that the WLAN system can be used as one high-speed packet channel of the 3G cellular system.

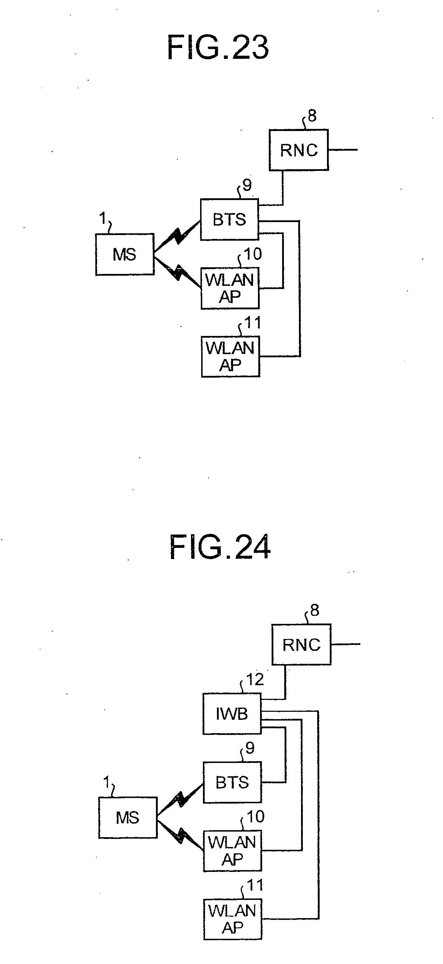

Fig. 23 depicts a connection mode between the radio network controller 8, the base transceiver station 9, and the WLAN access point stations 10 and 11. In the 3G cellular/WLAN according to the present embodiment, the access network unit includes the base transceiver station 9 that can perform wireless communications with the mobile terminal 1 in the wireless LAN system, and is connected to the WLAN access point stations 10 and 11 of the WLAN system, and the radio network controller 8 electrically connected to the base transceiver station 9.

The operation is explained with reference to Fig. 23. A mechanism for controlling the WLAN system as the channel of the 3G cellular system is installed in the radio network controller 8 and the base transceiver station 9. Accordingly, the radio network controller 8 can perform control, assuming that a high-speed channel by the WLAN system is installed in the base transceiver station 9. f Furthermore, since the radio network controller 8 does not need to directly control the WLAN access point stations, the WLAN system can be used as one high-speed packet channel of the 3G cellular system, while reducing addition of functions to the radio network controller.

### Sixteenth Embodiment

In the first embodiment described above, the radio network controller is connected to the WLAN access point station so that the WLAN system is used as one high-speed packet channel of the 3G cellular system. Whereas according to the present embodiment, an interworking box (IWB) is connected between the radio network controller and the base transceiver station, and between the radio network controller and the WLAN access point station, so that the radio network controller and the interworking box control the WLAN access point station, and the WLAN system is used as one high-speed packet' channel of the 3G cellular system.

Fig. 24 depicts a connection mode between the radio network controller 8, the base transceiver station 9, the WLAN access point stations 10 and 11, and an IWB 12.

The operation is explained with reference to Fig. 24. A mechanism for controlling the WLAN system as a channel of the 3G cellular system is installed in the radio network controller 8 and the IWB 12. Accordingly, the existing base transceiver station 9 and WLAN access point stations 10 and 11 can be used. Since the radio network controller 8 can assume that the high-speed channel by the WLAN system is installed in the IWB, the IWB 12 seems to be the base transceiver station 9 as seen from the radio network controller 8, and the IWB 12 seems to be the radio network controller 8 as seen from the base transceiver station 9.

Thus, in the 3G cellular/WLAN according to the present embodiment, the radio network controller 8 is connected to the base transceiver station 9 via the IWB 12, in addition to the configuration of the fifteenth embodiment. Accordingly, the WLAN system can be used as one high-speed packet channel of the 3G cellular system by improving the radio network controller and adding the IWB, without giving any impact on the existing base transceiver station and the WLAN access point stations.

### INDUSTRIAL APPLICABILITY

The present invention is a mobile communication system of a new form, which integrates a third-generation mobile communication system having a wide coverage and the wireless LAN capable of performing high-speed data communications, and is preferable as a mobile communication system in the near future.

## Claims

1. A third-generation mobile-communication/wireless-local-area-network integration system in which a third-generation mobile communication system and a wireless local-area-network system are integrated, wherein
the third-generation mobile communication system includes an access network unit that controls the wireless local-area-network system by regarding the wireless local-area-network system as a packet communication channel.

2. The third-generation mobile-communication/wireless-local-area-network integration system according to claim 1, wherein
the access network unit includes a radio network controller connected to a base transceiver station capable of performing a wireless communication with a mobile terminal in the wireless local-area-network system, and electrically connected to an access point station of the wireless local-area-network system.

3. The third-generation mobile-communication/wireless-local-area-network integration system according to claim 1, wherein
the access network unit includes
a base transceiver station capable of performing a wireless communication with a mobile terminal in the wireless local-area-network system and connected to an access point station of the wireless local-area-network system; and
a radio network controller electrically connected to the base transceiver station.

4. The third-generation mobile-communication/wireless-local-area-network integration system according to claim 3, wherein
the radio network controller is connected to the base transceiver station via an interworking box.

5. The third-generation mobile-communication/wireless-local-area-network integration system according to claim 2, wherein
the radio network controller forms a signaling channel of the third-generation mobile communication system with the mobile terminal via the base transceiver station, and forms a data channel with the mobile terminal via the access point station.

6. The third-generation mobile-communication/wireless-local-area-network integration system according to claim 1, wherein
the mobile terminal performs a measurement of the third-generation mobile communication system and a measurement of the wireless local-area-network system, and transmits results of the measurements to the radio network controller.

7. The third-generation mobile-communication/wireless-local-area-network integration system according to claim 6, wherein
the radio network controller transmits a measurement condition relating to the wireless local-area-network system in addition to information on each cell to the mobile terminal, with a system information notification, and
the mobile terminal performs the measurement according to the measurement condition relating to the wireless local-area-network system.

8. The third-generation mobile-communication/wireless-local-area-network integration system according to claim 6, wherein
the radio network controller performs a selection of an access point station to be connected with the mobile terminal based on the results of the measurements from the mobile terminal, and transmits a result of the selection to the mobile terminal, and
the mobile terminal accesses the access point station based on the result of the selection.

9. The third-generation mobile-communication/wireless-local-area-network integration system according to claim 6, wherein
the radio network controller notifies the mobile terminal that the system to be connected with the mobile terminal is the wireless local-area-network system, based on the results of the measurements from the mobile terminal, and
the mobile terminal probes for the access point station to be connected according to a wireless local-area-network probe procedure, to connect to the access point station.

10. The third-generation mobile-communication/wireless-local-area-network integration system according to claim 5, wherein
the mobile terminal and the radio network controller exchange media-access-control address information using the signaling channel.

11. The third-generation mobile-communication/wireless-local-area-network integration system according to claim 10, wherein
when the mobile terminal informs the media-access-control address information to the radio network controller, the mobile terminal performs a communicates using a unique message.

12. The third-generation mobile-communication/wireless-local-area-network integration system according to claim 5, wherein
after notifying a security parameter of the third-generation mobile communication system and a security parameter of the wireless local-area-network system to the radio network controller, the mobile terminal uses a wireless bearer setup procedure of the third-generation mobile communication system to form a channel of the wireless local-area-network system.

13. The third-generation mobile-communication/wireless-local-area-network integration system according to claim 6, wherein
the mobile terminal informs measurement information of an adjacent access point station to the radio network controller, and
the radio network controller switches the access point station based on the measurement information.

14. The third-generation mobile-communication/wireless-local-area-network integration system according to claim 6, wherein
the mobile terminal switches the access point station at the discretion of the mobile terminal, and informs switching information to the radio network controller.

15. The third-generation mobile-communication/wireless-local-area-network integration system according to claim 5, wherein
the radio network controller performs switching from a channel of the third-generation mobile communication system to a channel of the wireless local-area-network system using signaling of the third-generation mobile communication system.

16. The third-generation mobile-communication/wireless-local-area-network integration system according to claim 5, wherein
the radio network controller performs switching from a channel of the wireless local-area-network system to a channel of the third-generation mobile communication system using signaling of the third-generation mobile communication system.

17. The third-generation mobile-communication/wireless-local-area-network integration system according to claim 5, wherein
the mobile terminal stands by in a waiting mode for the third-generation mobile communication system, and when using a channel of the wireless local-area-network system, uses signaling of the third-generation mobile communication system.

18. A third-generation mobile-communication/wireless-local-area-network integration method of integrating a third-generation mobile communication system and a wireless local-area-network system, the third-generation mobile-communication/wireless-local-area-network integration method comprising:
connecting the wireless local-area-network system to an access network unit of the third-generation mobile communication system; and
controlling the wireless local-area-network system by regarding the wireless local-area-network system as a packet communication channel.

19. The third-generation mobile-communication/wireless-local-area-network integration method according to claim 18, further comprising:
making a mobile terminal in the wireless local-area-network system capable of performing a wireless communication with a base transceiver station of the access network unit; and
connecting electrically an access point station of the wireless local-area-network system to a radio network controller of the access network unit.

20. The third-generation mobile-communication/wireless-local-area-network integration method according to claim 18, further comprising:
making a mobile terminal in the wireless local-area-network system capable of performing a wireless communication with a base transceiver station of the access network unit; and
connecting electrically an access point station of the wireless local-area-network system to a radio network controller of the access network unit via the base transceiver station.
